(19) Europäisches Patentamt
European Patent Office
Office européen des brevets

(11) **EP 4 583 040 A1**

(12) **EUROPEAN PATENT APPLICATION**
published in accordance with Art. 153(4) EPC

(43) Date of publication:
**09.07.2025 Bulletin 2025/28**

(21) Application number: **23893463.2**

(22) Date of filing: **11.10.2023**

(51) International Patent Classification (IPC):
**G06T 3/40** (2024.01)

(52) Cooperative Patent Classification (CPC):
**G06V 10/44; G06T 1/60; G06T 3/4053; G06T 7/20; G06V 10/806**

(86) International application number:
**PCT/CN2023/123916**

(87) International publication number:
**WO 2024/109371 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.11.2022 CN 202211476937**

(71) Applicant: **Tencent Technology (Shenzhen) Company Limited**
**Shenzhen, Guangdong 518057 (CN)**

(72) Inventors:
• **WANG, Zirui**
  **Shenzhen, Guangdong 518057 (CN)**
• **CHEN, Mingliang**
  **Shenzhen, Guangdong 518057 (CN)**

(74) Representative: **EP&C**
**P.O. Box 3241**
**2280 GE Rijswijk (NL)**

(54) **VIDEO SUPER-RESOLUTION METHOD AND APPARATUS, DEVICE AND MEDIUM**

(57)     The present application belongs to the technical field of image processing. Disclosed are a video super-resolution method and apparatus, a device and a storage medium. The method comprises: acquiring the (i+1)th image frame from a video, and acquiring an image feature of the cached i-th image frame and a long time sequence feature before the i-th image frame; inputting the image feature of the i-th image frame, the long time sequence feature before the i-th image frame and the (i+1)th image frame into a generative network for super-resolution prediction, and outputting a super-resolution image of the i-th image frame, an image feature of the (i+1)th image frame and a long time sequence feature before the (i+1)th image frame; and caching the image feature of the (i+1)th image frame and the long time sequence feature before the (i+1)th image frame, wherein i is a positive integer greater than 2. By caching a time sequence feature of the previous frame, the method takes into account the time sequence feature of the previous frame when performing super-resolution on the (i+1)th image frame, and uses an inter-frame stability loss function to ensure the time sequence stability between adjacent frames, thereby avoiding the inter-frame hopping phenomenon.

FIG. 1

EP 4 583 040 A1

## Description

RELATED APPLICATION

This application claims priority to Chinese Patent Application No. 202211476937.7, entitled "VIDEO SUPER-RESOLUTION METHOD AND APPARATUS, DEVICE, AND MEDIUM" and filed with the China National Intellectual Property Administration on November 23, 2022.

FIELD OF THE TECHNOLOGY

This application relates to the field of artificial intelligence, and in particular, to a video super-resolution technology.

BACKGROUND OF THE DISCLOSURE

With the development of image processing technologies, an image super-resolution processing technology for reconstructing an observed low-resolution image into a corresponding high-resolution image to improve the resolution of the original image has emerged.

In the related art, a generative network in a generative adversarial network is used to generate high-resolution images with richer details. However, because the generative adversarial network generates details randomly, same objects in adjacent frames are not completely aligned after super-resolution, or details added to an $(i+1)^{th}$ image frame cannot be aligned with details added to an $i^{th}$ image frame. This results in visual perception of video discontinuity. In other words, an issue related to stability of time series continuity is prone to occur, for example, an inter-frame jump.

SUMMARY

This application provides a video super-resolution processing method and apparatus, a device, and a medium, so as to resolve an inter-frame jump problem during video super-resolution by introducing a time series feature of different image frames. The technical solutions are as follows:

According to one aspect of this application, a video super-resolution processing method is provided, the method being performed by a computer device, and the method including:

obtaining an $(i+1)^{th}$ image frame from a video, and obtaining an image feature of an $i^{th}$ image frame in the video and a long time series feature before the $i^{th}$ image frame, the image feature of the $i^{th}$ image frame and the long time series feature before the $i^{th}$ image frame being cached during super-resolution processing of the $i^{th}$ image frame and an $(i-1)^{th}$ image frame, respectively;

performing super-resolution prediction on the image feature of the $i^{th}$ image frame, the long time series feature before the $i^{th}$ image frame, and the $(i+1)^{th}$ image frame by using a generative network, to obtain a super-resolution image of the $(i+1)^{th}$ image frame, an image feature of the $(i+1)^{th}$ image frame, and a long time series feature before the $(i+2)^{th}$ image frame; and

caching the image feature of the $(i+1)^{th}$ image frame and the long time series feature before the $(i+2)^{th}$ image frame;

i being a positive integer greater than 2.

According to another aspect of this application, a video super-resolution processing apparatus is provided, the apparatus including:

an obtaining module, configured to: obtain an $(i+1)^{th}$ image frame from a video, and obtain an image feature of an $i^{th}$ image frame in the video and a long time series feature before the $i^{th}$ image frame, the image feature of the $i^{th}$ image frame and the long time series feature before the $i^{th}$ image frame being cached by a cache module during super-resolution processing of the $i^{th}$ image frame and an $(i-1)th$ image frame, respectively;

a generative network module, configured to perform super-resolution prediction on the image feature of the $i^{th}$ image frame, the long time series feature before the $i^{th}$ image frame, and the $(i+1)^{th}$ image frame, to obtain a super-resolution image of the $(i+1)^{th}$ image frame, an image feature of the $(i+1)^{th}$ image frame, and a long time series feature before the $(i+2)^{th}$ image frame; and

the cache module, configured to cache the image feature of the $(i+1)^{th}$ image frame and the long time series feature before the $(i+2)^{th}$ image frame;

i being a positive integer greater than 2.

According to another aspect of this application, a computer device is provided, the computer device including a processor and a memory, the memory storing at least one instruction, at least one program, a code set, or an instruction set, and the at least one instruction, the at least one program, the code set, or the instruction set being loaded and executed by the processor to implement the video super-resolution processing method according to the foregoing aspect.

According to another aspect of this application, a computer-readable storage medium is provided, the computer-readable storage medium storing at least one instruction, at least one program, a code set, or an instruction set, and the at least one instruction, the at least one program, the code set, or the instruction set being loaded and executed by a processor to implement the video super-resolution processing method according to the foregoing aspect.

According to another aspect of this application, a computer program product is provided, the computer program product including at least one program, the at least one program being stored in a computer-readable storage medium, a processor of a computer device reading the at least one program from the computer-readable storage medium, and the processor executing the at least one program to cause the computer device to perform the video super-resolution processing method according to the foregoing aspect.

The technical solutions provided in this application have at least the following beneficial effects:
After super-resolution processing is performed on the $i^{th}$ image frame, if i is a positive integer greater than 2, the image feature of the $i^{th}$ image frame and the long time series feature before the $i^{th}$ image frame can be cached. The image feature of the $i^{th}$ image frame can indicate information in a previous image frame, and the long time series feature before the $i^{th}$ image frame can indicate time series information between several previous image frames. Therefore, when super-resolution processing is performed on the $(i+1)^{th}$ image frame in the video, to ensure time series stability between adjacent frames, the image feature of the $i^{th}$ image frame and the long time series feature before the $i^{th}$ image frame can be obtained. Thus, super-resolution prediction is performed on the image feature of the $i^{th}$ image frame, the long time series feature before the $i^{th}$ image frame, and the $(i+1)^{th}$ image frame by using the generative network. With reference to the image feature of the current image frame, the image feature of the previous image frame, and the long time series feature before the previous image frame, the super-resolution image of the $(i+1)^{th}$ image frame, the image feature of the $(i+1)^{th}$ image frame, and the long time series feature before the $(i+2)^{th}$ image frame are obtained. After that, the image feature of the $(i+1)^{th}$ image frame and the long time series feature before the $(i+2)^{th}$ image frame continue to be cached, so as to be used for super-resolution processing of a subsequent frame. Through caching of the long time series feature of a previous frame, reference is made to the time series feature of the previous image frame when super-resolution is performed on the $(i+1)^{th}$ image frame. In other words, when super-resolution processing is performed to obtain details of the $(i+1)^{th}$ image frame, reference is made to details of the previous image frames, so as to align details added to the $(i+1)^{th}$ image frame with details added to the $i^{th}$ image frame. In this way, time series stability between the adjacent frames can be ensured, so that no inter-frame jump occurs.

BRIEF DESCRIPTION OF THE DRAWINGS

To describe technical solutions of embodiments of this application more clearly, the following briefly describes accompanying drawings required for describing the embodiments. Apparently, the accompanying drawings in the following description show merely some embodiments of this application, and a person of ordinary skill in the art may still derive other drawings from these accompanying drawings without creative efforts.

FIG. 1 is a diagram of a structure of a video super-resolution processing method according to an exemplary embodiment of this application.

FIG. 2 is a flowchart of a video super-resolution processing method according to an exemplary embodiment of this application.

FIG. 3 is a flowchart of a video super-resolution processing method according to an exemplary embodiment of this application.

FIG. 4 is a flowchart of a feature extraction network according to an exemplary embodiment of this application.

FIG. 5 is a flowchart of a feature fusion network according to an exemplary embodiment of this application.

FIG. 6 is a flowchart of a feature fusion network according to an exemplary embodiment of this application.

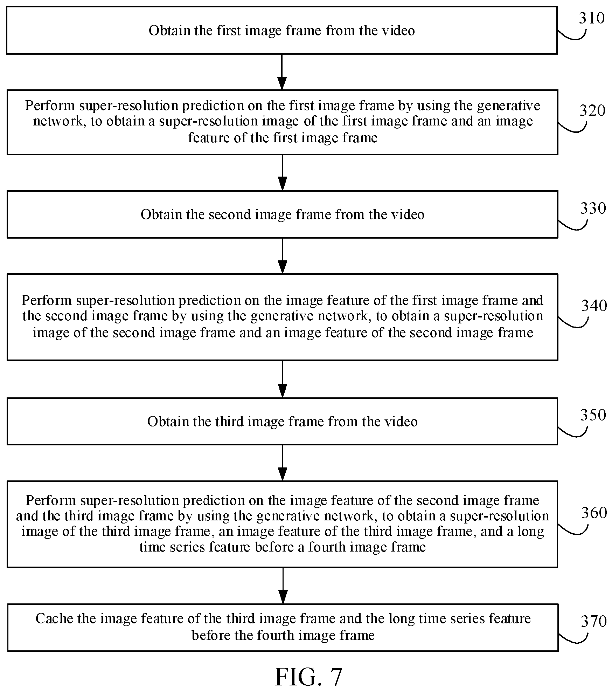

FIG. 7 is a flowchart of a video super-resolution processing method according to an exemplary embodiment of this application.

FIG. 8 is a diagram of a structure of training in a video super-resolution processing method according to an exemplary embodiment of this application.

FIG. 9 is a flowchart of training in a video super-resolution processing method according to an exemplary embodiment of this application.

FIG. 10 is a flowchart of training in a video super-resolution processing method according to an exemplary embodiment of this application.

FIG. 11 is a diagram of a structure of training in a video super-resolution processing method according to an exemplary embodiment of this application.

FIG. 12 is a block diagram of a video super-resolution processing apparatus according to an exemplary embodiment of this application.

FIG. 13 is a block diagram of a video super-resolution processing apparatus according to an exemplary embodiment of this application.

FIG. 14 is a block diagram of a computer device according to an exemplary embodiment of this application.

DESCRIPTION OF EMBODIMENTS

To make objectives, technical solutions, and advantages of this application clearer, the following further describes implementations of this application in detail with reference to accompanying drawings.

First, terms used in embodiments of this application are briefly described.

Neural network: an algorithmic mathematical model that imitates behavioral characteristics of animal neural networks and performs distributed parallel information processing. This type of network depends on complexity of a system, and adjusts connection relationships between a lot of internal nodes, so as to achieve an objective of processing information.

Generative adversarial network (GAN): includes a generative network and a discriminative network. The generative network is configured to generate a super-resolution image, and the discriminative network is configured to determine whether an image conforms to distribution of a real image.

Image features: features for describing corresponding properties of an image or an image area, including a color feature, a texture feature, a shape feature, and a spatial relationship feature. Image features are usually extracted by a feature extraction layer in a neural network. Image features may be represented by using vectors.

Time series: alternatively termed as temporal sequence, which is a sequence of data points arranged in chronological order. Usually, a time interval of a time series is a constant value, for example, 1 second or 1 minute. The data point in an image time series may be understood as 1 frame.

Resolution: may be subdivided into a display resolution, an image resolution, a print resolution, a scan resolution, and the like. A resolution determines fineness of image details. Usually, a higher resolution of an image indicates a larger quantity of pixels included and a clearer image.

In the related art, resolutions of displays gradually increase, but a 4K or 8K resolution cannot be reached when many videos are shot. A super-resolution technology can resolve the problem by increasing video resolutions to adapt to corresponding displays. At present, a super-resolution technology based on a deep neural network has a good effect in image processing. However, details and textures in a result of a neural network based on a pixel loss function are smooth, and a visual effect is poor. Compared with the neural network based on a pixel loss function, a generative adversarial network can generate a high-resolution image with more details and richer textures from each image frame. However, because a generative adversarial network generates details randomly, applying a super-resolution technology based on a generative adversarial network to videos may result in a severe issue related to stability of time series continuity, for example, an inter-frame jump. An inter-frame jump means that the same object in adjacent frames is not completely aligned after super-resolution, or added details and textures are not aligned, appear in spurts, and drift leftward or rightward, leading to visual discontinuity and dissonance.

Aiming at the foregoing problem, this application provides a video super-resolution processing method. The following describes the method.

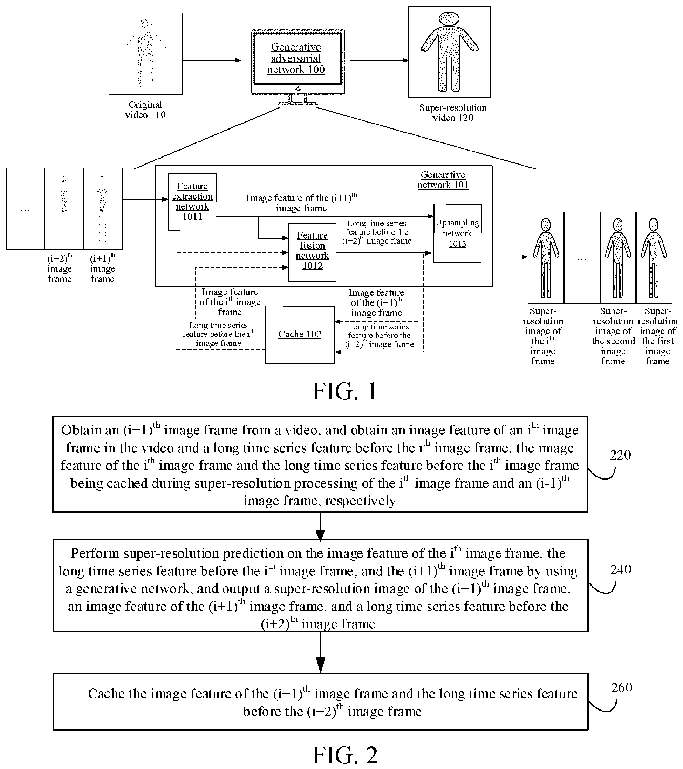

FIG. 1 is a diagram of a structure of a video super-resolution processing method according to an exemplary embodiment of this application.

An original video 110 is inputted into a generative adversarial network 100, and a super-resolution video 120 corresponding to the original video 110 is outputted. The original video 110 has a first resolution, and the super-resolution video 120 has a second resolution. The first resolution is lower than the second resolution.

The original video 110 includes several image frames. To perform super-resolution processing on the original video 110 is to perform super-resolution processing on the several image frames in the original video 110, to obtain super-resolution images with a super resolution and then obtain the super-resolution video 120 that includes the super-resolution images. As shown in FIG. 1, the image frames in the original video 110 are inputted into the generative adversarial network 100 according to a time series of the video, to obtain a super-resolution image of the first image frame, a super-resolution image of the second image frame, ..., and a super-resolution image of an $i^{th}$ image frame. A next to-be-inputted image frame in the original video 110 is an $(i+1)^{th}$ image frame.

In some embodiments, the generative adversarial network 100 includes a generative network 101. The generative network 101 further includes a feature extraction network 1011, a feature fusion network 1012, and an upsampling network 1013. A low-resolution image (the $(i+1)^{th}$ image frame) in the original video 110 is inputted into the generative network 101, and an image features of the $(i+1)^{th}$ image frame is obtained by using the feature extraction network 1011. The image feature of the $(i+1)^{th}$ image frame, and image feature of the $i^{th}$ image frame and a long time series feature before the $i^{th}$ image frame that are cached in a cache 102 are inputted into the feature fusion network 1012, to obtain a long time series feature before the $(i+2)^{th}$ image frame. The image feature of the $(i+1)^{th}$ image frame and the long time series feature before the $(i+2)^{th}$ image frame are inputted into the upsampling network 1013 for prediction, and a super-resolution image of the $(i+1)^{th}$ image frame is obtained.

The image feature of the $i^{th}$ image frame and the long time series feature before the $i^{th}$ image frame are cached in the cache 102 when the generative network 101 processes the $i^{th}$ image frame in the original video 110. When the generative network 101 processes the $(i+1)^{th}$ image frame in the original video 110, the cache 102 provides the image feature of the $i^{th}$ image frame and the long time series feature before the $i^{th}$ image frame to the feature fusion network 1012, and in addition, continues to cache the image feature of the $(i+1)^{th}$ image frame and the long time series feature before the $(i+2)^{th}$ image frame. This implements cyclic use of image features and long time series features.

FIG. 2 is a flowchart of a video super-resolution processing method according to an exemplary embodiment of this application. The method is performed by a computer device, and includes the following operations:

**Operation 220:** Obtain an $(i+1)^{th}$ image frame from a video, and obtain an image feature of an $i^{th}$ image frame in the video and a long time series feature before the $i^{th}$ image frame, the image feature of the $i^{th}$ image frame and the long time series feature before the $i^{th}$ image frame being cached during super-resolution processing of the $i^{th}$ image frame.

The $(i+1)^{th}$ image frame is obtained from the original video that needs to be processed. The $(i+1)^{th}$ image frame is an image frame that is in the original video and on which super-resolution processing needs to be performed currently, and is a low-resolution image frame. i is a positive integer greater than 2. In other words, a long time series feature may be generated, starting from the third image frame. Thus, corresponding image features and long time series features are cached. Starting from the fourth image frame, super-resolution processing may be performed by using the method provided in this embodiment.

When super-resolution operations are performed on the video, image frames in the video are sequentially processed according to a time series (or a temporal sequence) of the video. For example, the first image frame is processed first, then the second image frame is processed, ..., and the $i^{th}$ image frame is processed. Usually, in a video super-resolution operation method, an $i^{th}$ image frame is directly inputted into a generative network, to obtain a super-resolution image of the $i^{th}$ image frame. With this method, when super-resolution prediction is performed on an image frame, information in the image frame is prone to loss. Therefore, image features and long time series features are introduced in this embodiment of this application.

The long time series feature includes image features of a plurality of image frames that are accumulated in a long time series according to an order in which super-resolution operations are performed on image frames in a video. The long time series feature include information in several previous image frames in a super-resolution operation process. The long time series is a time series with a time length greater than a threshold.

When super-resolution operations are performed on the first image frame and the second image frame in the original video, a long time series feature in this case may be considered as a null value or a preset value. This is not discussed in this embodiment.

In this embodiment, starting from the third image frame in the original video, the long time series feature before the image frame is generated when super-resolution processing is performed. Therefore, during super-resolution processing of the $i^{th}$ image frame, the image feature of the $i^{th}$ image frame in the video and the long time series feature before the $i^{th}$ image frame may be cached. The $i^{th}$ image frame is an image frame that is in the video and on which super-resolution processing has been performed.

In some embodiments, the long time series feature before the $i^{th}$ image frame may be cumulative features of all images from the first image frame to an $(i-1)^{th}$ image frame in the original video according to a playing time series (or a playing order) of the original video.

In some embodiments, the long time series feature before the $i^{th}$ image frame may be cumulative features of last several image frames (for example, a predetermined number of image frames) before the $i^{th}$ image frame, for example, may be cumulative features of last three image frames before the $i^{th}$ image frame, including an image feature of an $(i-3)^{th}$ image frame, an image feature of an $(i-2)^{th}$ image frame, and an image feature of the $(i-1)^{th}$ image frame; or may be cumulative features of last five image frames before the $i^{th}$ image frame, including an image feature of an $(i-5)^{th}$ image frame, an image feature of an $(i-4)^{th}$ image frame, an image feature of an $(i-3)^{th}$ image frame, an image feature of an $(i-2)^{th}$ image frame, and an image feature of the $(i-1)^{th}$ image frame.

In some embodiments, the long time series feature before the $i^{th}$ image frame may be determined based on a caching capability of a cache. If the caching capability of the cache is larger, more information about the long time series feature before the $i^{th}$ image frame is retained. If the caching capability of the cache is smaller, less information about the long time series feature before the $i^{th}$ image frame is retained.

**Operation 240:** Perform super-resolution prediction on the image feature of the $i^{th}$ image frame, the long time series feature before the $i^{th}$ image frame, and the $(i+1)^{th}$ image frame by using a generative network, and output a super-resolution image of the $(i+1)^{th}$ image frame, an image feature of the $(i+1)^{th}$ image frame, and a long time series feature before the $(i+2)^{th}$ image frame.

In some embodiments, the image feature of the $i^{th}$ image frame and the long time series feature before the $i^{th}$ image frame that are cached, and the $(i+1)^{th}$ image frame that is obtained from the video and on which super-resolution processing needs to be performed currently are inputted into the generative network for super-resolution prediction. The super-resolution image of the $(i+1)^{th}$ image frame, the image feature of the $(i+1)^{th}$ image frame, and the long time series feature before the $(i+2)^{th}$

image frame are outputted by the generative network.

Operation 260: Cache the image feature of the $(i+1)^{th}$ image frame and the long time series feature before the $(i+2)^{th}$ image frame.

After the image feature of the $(i+1)^{th}$ image frame and the long time series feature before the $(i+2)^{th}$ image frame are obtained, the image feature of the $(i+1)^{th}$ image frame and the long time series feature before the $(i+2)^{th}$ image frame may be cached, so as to be used for super-resolution processing of a next image frame.

In conclusion, according to the method provided in this embodiment, after super-resolution processing is performed on the $i^{th}$ image frame, if i is a positive integer greater than 2, the image feature of the $i^{th}$ image frame and the long time series feature before the $i^{th}$ image frame can be cached. The image feature of the $i^{th}$ image frame can indicate information in a previous image frame, and the long time series feature before the $i^{th}$ image frame can indicate time series information between several previous image frames. Therefore, when super-resolution processing is performed on the $(i+1)^{th}$ image frame in the video, to ensure time series stability between adjacent frames, the image feature of the $i^{th}$ image frame and the long time series feature before the $i^{th}$ image frame can be obtained. Thus, super-resolution prediction is performed on the image feature of the $i^{th}$ image frame, the long time series feature before the $i^{th}$ image frame, and the $(i+1)^{th}$ image frame by using the generative network. With reference to the image feature of the current image frame, the image feature of the previous image frame, and the long time series feature before the previous image frame, the super-resolution image of the $(i+1)^{th}$ image frame, the image feature of the $(i+1)^{th}$ image frame, and the long time series feature before the $(i+2)^{th}$ image frame are obtained. After that, the image feature of the $(i+1)^{th}$ image frame and the long time series feature before the $(i+2)^{th}$ image frame are cached, so as to be used for super-resolution processing of a subsequent frame. Through caching of long time series feature of previous frames, reference is made to the time series feature of the previous image frames when super-resolution is performed on the $(i+1)^{th}$ image frame. In other words, when super-resolution processing is performed to obtain details of the $(i+1)^{th}$ image frame, reference is made to details of the previous image frames, so as to align details added to the $(i+1)^{th}$ image frame with details added to the $i^{th}$ image frame. In this way, time series stability between the adjacent frames can be ensured, so that no inter-frame jump occurs.

The generative network is configured to generate a super-resolution image of an image frame. As shown in FIG. 1, the generative network 101 includes the feature extraction network 1011, the feature fusion network 1012, and the upsampling network 1013. The $(i+1)^{th}$ image frame in the original video 110 is inputted into the generative network 101; the image feature of the $(i+1)^{th}$ image frame are obtained by using the feature extraction network 1011 in the generative network 101; the image feature of the $i^{th}$ image frame, the image feature of the $(i+1)^{th}$ image frame, and the long time series feature before the $i^{th}$ image frame are fused into the long time series feature before the $(i+2)^{th}$ image frame by using the feature fusion network 1012 in the generative network; and the super-resolution image of the $(i+1)^{th}$ image frame is outputted through prediction performed by the upsampling network 1013 in the generative network 101.

In some embodiments, operation 240 further includes the following sub-operations:

Operation 241: Perform feature extraction on the $(i+1)^{th}$ image frame by using the feature extraction network, to obtain the image feature of the $(i+1)^{th}$ image frame.

In some embodiments, the feature extraction network is configured to output the image feature of the $(i+1)^{th}$ image frame based on an input of the $(i+1)^{th}$ image frame. By using the feature extraction network, an image corresponding to a low-resolution image frame in the original video is mapped to an eigenspace, and an image feature of the low-resolution image frame is extracted.

In a possible implementation, a convolutional network may be used as the feature extraction network, and a plurality of convolution kernels of different sizes are used to process an image.

In some embodiments, the convolutional network includes a first convolution kernel, a second convolution kernel, a third convolution kernel, a fourth convolution kernel, and a fifth convolution kernel. The first convolution kernel, the second convolution kernel, and the fourth convolution kernel are 3*3 convolution kernels, and the third convolution kernel and the fifth convolution kernel are 1*1 convolution kernels. An original image is inputted into the first convolution kernel, the second convolution kernel, and the third convolution kernel. An output end of the first convolution kernel is connected to an input end of the fourth convolution kernel, and an output end of the second convolution kernel, an output end of the third convolution kernel, and an output end of the fourth convolution kernel are connected to an input end of the fifth convolution kernel. The fifth convolution kernel outputs image feature of the original image.

The $(i+1)^{th}$ image frame is inputted into the convolutional network, and a first convolution result is obtained after convolution by the first convolution kernel.

A second convolution result is obtained after convolution by the second convolution kernel.

A third convolution result is obtained after convolution by the third convolution kernel.

The first convolution result is inputted into the fourth convolution kernel, and a fourth convolution result is obtained after convolution by the fourth convolution kernel.

The second convolution result, the third convolution result, and the fourth convolution result are inputted into the fifth convolution kernel, and the image feature of the $(i+1)^{th}$ image frame are obtained after convolution by the fifth convolution kernel.

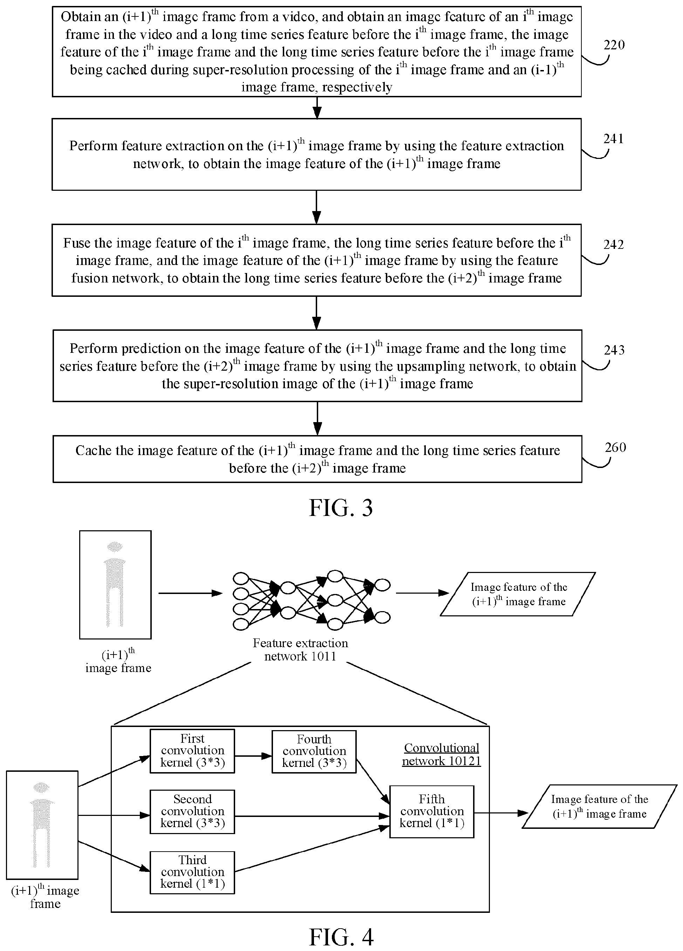

For example, as shown in FIG. 4, the (i+1)$^{th}$ image frame is inputted into the feature extraction network 1011, and the image feature of the (i+1)$^{th}$ image frame can be outputted correspondingly. The (i+1)$^{th}$ image frame is inputted into the feature extraction network 1011. After the (i+1)$^{th}$ image frame moves through convolution kernels of different sizes, the image feature of the (i+1)$^{th}$ image frame are outputted. A convolutional network 10121 is used as the feature extraction network 1011. The (i+1)$^{th}$ image frame is inputted into the feature extraction network 1011. After convolution by a first convolution kernel (3*3), a second convolution kernel (3*3), and a third convolution kernel (1*1) that are parallel, an output of the first convolution kernel (3*3) moves through a concatenated fourth convolution kernel (3*3), and an output of the second convolution kernel (3*3), an output of the third convolution kernel (1*1), and an output of the fourth convolution kernel (3*3) are inputted together into a fifth convolution kernel (1*1). The image feature of the (i+1)$^{th}$ image frame is outputted.

In conclusion, according to the method provided in this embodiment, feature extraction is performed on an image by using the feature extraction network, to obtain an image feature of the corresponding image. The convolutional network is used and the plurality of convolution kernels of different sizes are used, to fully extract the image feature and retain more information in the image, so that a super-resolution prediction result is more accurate.

**Operation 242:** Fuse the image feature of the i$^{th}$ image frame, the long time series feature before the i$^{th}$ image frame, and the image feature of the (i+1)$^{th}$ image frame by using the feature fusion network, to obtain the long time series feature before the (i+2)$^{th}$ image frame.

In some embodiments, the feature fusion network is configured to perform feature fusion on the image feature of the i$^{th}$ image frame, the long time series feature before the i$^{th}$ image frame, and the image feature of the (i+1)$^{th}$ image frame, to output the long time series feature before the (i+2)$^{th}$ image frame.

The feature fusion network is mainly configured to: align and extract features, concatenate features that need to be fused, cross-mix, by means of channel shuffle, at least two sets of features that need to be fused, and compress and extract cross-mixed features.

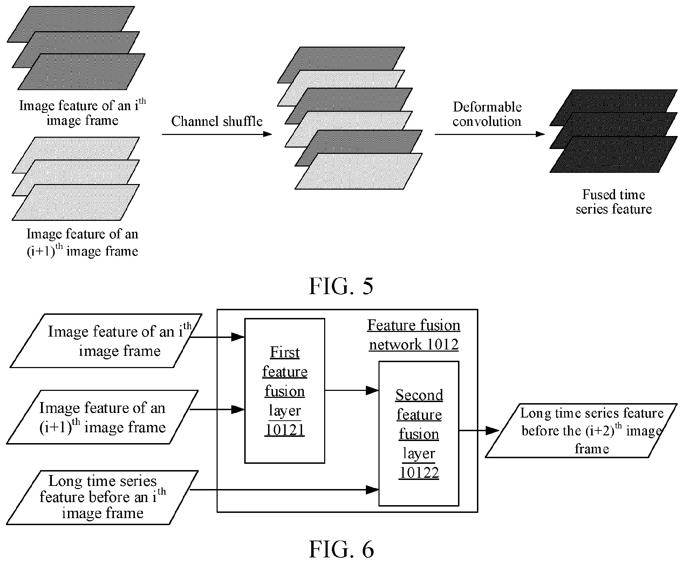

For example, as shown in FIG. 5, channel shuffle is performed on the image features of the (i+1)$^{th}$ image frame and the i$^{th}$ image frame to obtain mixed feature, and the mixed feature is compressed and extracted, for example, by means of a deformable convolutional network, to obtain a fused time series feature.

According to the method provided in this embodiment, image features are further fused by using the feature fusion network, to obtain the long time series feature. This increases a quantity of time series information during video image processing, so that information in previous image frames in a video time series can be fully utilized when a subsequent image is processed.

In some embodiments, the feature fusion network is a multi-phase fusion network, and includes at least a first feature fusion layer and a second feature fusion layer. The first feature fusion layer is configured to output the fused time series feature based on an input of the image feature of the (i+1)$^{th}$ image frame and the image feature of the i$^{th}$ image frame. The second feature fusion layer is configured to output the long time series feature before the (i+2)$^{th}$ image frame based on an input of the fused time series feature obtained in the first phase and the long time series feature before the i$^{th}$ image frame.

For example, as shown in FIG. 6, feature fusion is performed on the image feature of the i$^{th}$ image frame, the long time series feature before the i$^{th}$ image frame, and the image feature of the (i+1)$^{th}$ image frame by using the feature fusion network 1012. The image feature of the image frame on which super-resolution processing needs to be performed currently and the image feature of the previous image frame (the image feature of the (i+1)$^{th}$ image frame and the image feature of the i$^{th}$ image frame) are inputted into a first feature fusion layer 10121. Then, the long time series feature before the previous image frame (the long time series feature before the i$^{th}$ image frame) and an output of the first feature fusion layer 10121 are inputted together into a second feature fusion layer 10122, to output the long time series feature before the (i+2)$^{th}$ image frame.

According to the method provided in this embodiment, image features are further fused by using two phases of fusion layers. This can further prevent introduction of an artifact feature while improving an effect of feature fusion.

**Operation 243:** Perform prediction on the image feature of the (i+1)$^{th}$ image frame and the long time series feature before the (i+2)$^{th}$ image frame by using the upsampling network, to obtain the super-resolution image of the (i+1)$^{th}$ image frame.

In some embodiments, the upsampling network is configured to output the super-resolution image of the (i+1)$^{th}$ image frame based on an input of the image feature of the (i+1)$^{th}$ image frame and the long time series feature before the (i+2)$^{th}$ image frame.

Because super-resolution processing of the first image frame and super-resolution processing of the second image frame are slightly different from the foregoing operations, this application provides the following processing operations:

**Operation 310:** Obtain the first image frame from the video.

The first image frame is obtained from the original video. It is herein noted that the terms "first image frame", "second image frame" and "third image frame" are used to indicate a specific sequence of the image frames referred to in this embodiment; the first image frame is an image frame at the very start of the video, the second image frame immediately follows the first image frame, and the third image frame immediately follows the second image frame in this embodiment.

**Operation 320:** Perform super-resolution prediction on the first image frame by using the generative network, to obtain a super-resolution image of the first image frame and an image feature of the first image frame.

In some embodiments, only the first image frame is inputted into the generative network. The image feature of the first image frame is obtained by using the feature extraction network in the generative network. The image feature of the first image frame are inputted into the upsampling network, to obtain the super-resolution image of the first image frame. The image feature of the first image frame is cached in the cache for super-resolution prediction of a next image frame.

In some embodiments, long time series features of image frames in the original video are preset. The first image frame is inputted into the generative network. The image feature of the first image frame is obtained by using the feature extraction network in the generative network. The preset long time series feature and the image feature of the first image frame are inputted into the feature fusion network, to obtain a fused time series feature. The image feature of the first image frame and the fused time series feature are inputted into the upsampling network, to obtain the super-resolution image of the first image frame. The image feature of the first image frame and the fused time series feature are cached in the cache for super-resolution prediction of a next image frame.

**Operation 330:** Obtain the second image frame from the video.

The second image frame is obtained from the original video.

**Operation 340:** Perform super-resolution prediction on the image feature of the first image frame and the second image frame by using the generative network, to obtain a super-resolution image of the second image frame and an image feature of the second image frame.

In some embodiments, the second image frame is inputted into the generative network. The image feature of the second image frame is obtained by using the feature extraction network in the generative network. The image feature of the first image frame that is cached in the cache and the image feature of the second image frame are inputted into the feature fusion network, to obtain a fused feature of the first image frame and the second image frame. The image feature of the second image frame and the fused feature are inputted into the upsampling network, to obtain the super-resolution image of the second image frame.

In some embodiments, the long time series features of the image frames in the original video are preset. The second image frame is inputted into the generative network. The image feature of the second image frame is obtained by using the feature extraction network in the generative network. The image feature of the second image frame, and the image feature of the first image frame and the fused time series feature that are cached in the cache are inputted into the feature fusion network, to obtain a long time series feature before the second image frame. The image feature of the second image frame and the long time series feature before the second image frame are inputted into the upsampling network, to obtain the super-resolution image of the second image frame.

**Operation 350:** Obtain the third image frame from the video.

The third image frame is obtained from the original video.

**Operation 360:** Perform super-resolution prediction on the image feature of the second image frame and the third image frame by using the generative network, to obtain a super-resolution image of the third image frame, an image feature of the third image frame, and a long time series feature before a fourth image frame.

In some embodiments, the third image frame is inputted into the generative network. The image feature of the third image frame is obtained by using the feature extraction network in the generative network. The image feature of the second image frame that is cached in the cache and the image feature of the third image frame are inputted into the feature fusion network, to obtain a fused feature of the second image frame and the third image frame. The image feature of the third image frame and the fused feature are inputted into the upsampling network, to obtain the super-resolution image of the third image frame.

In some embodiments, the long time series features of the image frames in the original video are preset. The third image frame is inputted into the generative network. The image feature of the third image frame is obtained by using the feature extraction network in the generative network. The image feature of the third image frame, and the image feature of the second image frame and the fused time series feature cached in the cache are inputted into the feature fusion network, to obtain a long time series feature before the fourth image frame. The image feature of the third image frame and the long time series feature before the fourth image frame are inputted into the upsampling network, to obtain the super-resolution image of the third image frame.

**Operation 370:** Cache the image feature of the third image frame and the long time series feature before the fourth image frame.

Starting from the third image frame in the original video, real long time series features may be generated. Therefore, the image feature of the third image frame and the long time series feature before the fourth image frame may be cached, so as to be used for super-resolution processing of a next image frame. After that, the foregoing super-resolution prediction operation on the $(i+1)^{th}$ image frame may be performed.

A generative adversarial network usually includes a generative network and a discriminative network. The generative network is configured to generate a super-resolution image, and the discriminative network is configured to determine whether an image conforms to distribution of a real image. The discriminative network needs to be trained while the generative network is trained. The following embodiments mainly describe a method for training the generative network.

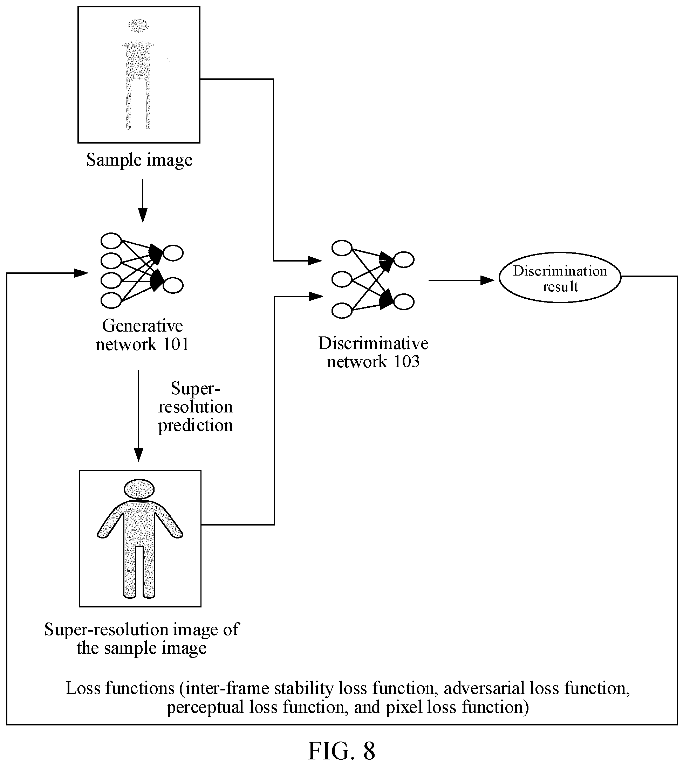

FIG. 8 is a diagram of a structure of training in a video super-resolution method according to an exemplary embodiment of this application.

In some embodiments, the training in the video super-resolution processing method is mainly training specific to a generative network 101. Whether a super-resolution image generated by the generative network 101 is accurate further needs to be determined by a discriminative network 103 to obtain a discrimination result. Therefore, the training in the video super-resolution processing method further requires training of the discriminative network.

In some embodiments, a training process mainly includes: inputting a sample image into the generative network 101, to obtain a super-resolution image of the sample image through super-resolution prediction performed by the generative network 101; inputting the sample image and the super-resolution image of the sample image into the discriminative network 103 for discrimination, and outputting a discrimination result; and training the generative network and the discriminative network alternately based on the discrimination result and a loss function. The loss function includes at least one of an inter-frame stability loss function, an adversarial loss function, a perceptual loss function, and a pixel loss function.

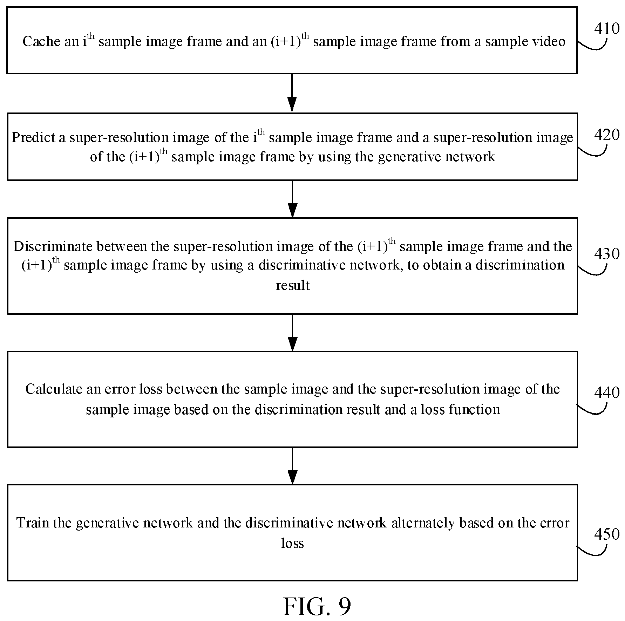

FIG. 9 is a flowchart of training in a video super-resolution processing method according to an exemplary embodiment of this application. This method includes the following operations:

**Operation 410:** Cache an $i^{th}$ sample image frame and an $(i+1)^{th}$ sample image frame from a sample video.

In some embodiments, a training set is given for training a generative network, and the training set includes a sample video.

The $i^{th}$ sample image frame and the $(i+1)^{th}$ sample image frame are cached from the sample video. The $(i+1)^{th}$ sample image frame is a current image, and the $i^{th}$ sample image frame is a historical image in the sample video.

**Operation 420:** Predict a super-resolution image of the $i^{th}$ sample image frame and a super-resolution image of the $(i+1)^{th}$ sample image frame by using the generative network.

In some embodiments, the generative network is configured to perform super-resolution prediction on an image frame. An image frame on which super-resolution prediction needs to be performed is inputted to obtain a super-resolution image of the corresponding image frame. For example, the $i^{th}$ sample image frame and the $(i+1)^{th}$ sample image frame are inputted, and the super-resolution image of the $i^{th}$ sample image frame and the super-resolution image of the $(i+1)^{th}$ sample image frame are outputted through super-resolution prediction by the generative network.

**Operation 430:** Discriminate between the super-resolution image of the $(i+1)^{th}$ sample image frame and the $(i+1)^{th}$ sample image frame by using a discriminative network, to obtain a discrimination result.

In some embodiments, the generative network is configured to predict a super-resolution result of an image. The super-resolution result requires discrimination by the discriminative network. For example, the super-resolution image of the $(i+1)^{th}$ sample image frame generated by the generative network and the $(i+1)^{th}$ sample image frame are inputted into the discriminative network, and the discriminative network determines whether the super-resolution image is a real super-resolution image of the $(i+1)^{th}$ sample image frame or the super-resolution image of the $(i+1)^{th}$ sample image frame generated by the generative network. If the discrimination result outputted by a discriminator is true or 1, the super-resolution image of the $(i+1)^{th}$ sample image frame generated by the generative network conforms to distribution of the real super-resolution image of the $(i+1)^{th}$ sample image frame. If the discrimination result outputted by a discriminator is false or 0, the super-resolution image of the $(i+1)^{th}$ sample image frame generated by the generative network does not conform to distribution of the real super-resolution image of the $(i+1)^{th}$ sample image frame.

**Operation 440:** Calculate an error loss between the sample image and the super-resolution image of the sample image based on the discrimination result and a loss function.

In the related art, part of a reason for an occurrence of an inter-frame jump may be that loss functions used in current super-resolution network training processes are mostly single-frame loss functions, which constrain a super-resolution result of each frame, and there is a lack of a constraint on stability between adjacent frames. This results in inconsistent results between the adjacent frames in output results, a noticeable jump, and poor stability. Based on this, in a possible implementation, in addition to several loss functions commonly used in a generative adversarial network, for example, an adversarial loss function, this application further provides an inter-frame stability loss function, which is configured for constraining a change between adjacent image frames.

An inter-frame stability loss is a parameter that constrains stability of changes between adjacent image frames in a video. The inter-frame stability loss mainly compares a change between a super-resolution result of a current sample image frame and a super-resolution result of a previous sample image frame, and a change between the two corresponding sample images; and constrains the changes to be as close as possible or within a specific threshold.

The corresponding error loss is calculated based on at least one loss function and the result of discrimination that is between the sample image and the super-resolution image of the sample image and that is outputted by the discriminative network.

**Operation 450:** Train the generative network and the discriminative network alternately based on the error loss.

The error loss calculated based on the loss function is fed back to the generative network and the discriminative network, to train the generative network and the discriminative network alternately.

In some embodiments, training the generative network and the discriminative network alternately includes fixing parameters of the generative network and training the discriminative network; or fixing parameters of the discriminative network and training the generative network; or training the generative network and the discriminative network simultaneously.

To sum up, according to the method provided in this embodiment, the $i^{th}$ sample image frame and the $(i+1)^{th}$ sample image frame in the sample video are cached, the super-resolution images are predicted by using the generative network, discrimination is performed on the super-resolution result by using the discriminative network, and in addition, the generative network and the discriminative network are trained alternately with reference to the loss function. Using a pixel-level loss function for constraining adjacent frames can stably improve time series continuity of adjacent frames, so as to obtain a generative network with more accurate generation results.

In some embodiments, after operation 430, training specific to the generative network and training specific to the discriminative network may be included.

**Training specific to the generative network:**

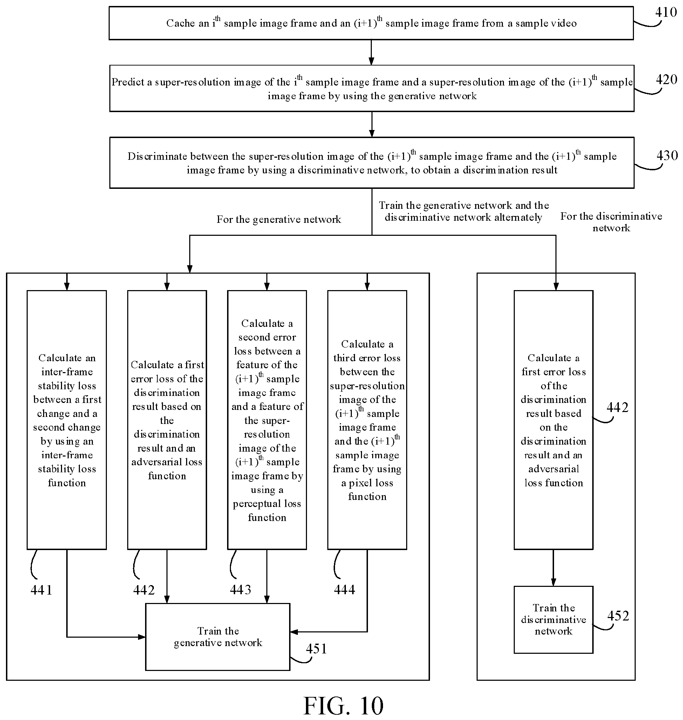

As shown in FIG. 10, operation 440 further includes the following sub-operations:

**Operation 441:** Calculate an inter-frame stability loss between a first change and a second change by using the inter-frame stability loss function.

Based on the $i^{th}$ sample image frame and the $(i+1)^{th}$ sample image frame, the generative network performs super-resolution prediction to obtain the super-resolution image of the $i^{th}$ sample image frame and the super-resolution image of the $(i+1)^{th}$ sample image frame. In this case, the first change is a change between the $i^{th}$ sample image frame and the $(i+1)^{th}$ sample image frame, and the second change is a change between the super-resolution image of the $i^{th}$ sample image frame and the super-resolution image of the $(i+1)^{th}$ sample image frame.

In this embodiment of this application, to resolve an inter-frame jump problem, a loss function used for the generative network during the training of the generative network may be the inter-frame stability loss function. Therefore, based on the inter-frame stability loss function, the inter-frame stability loss between the first change and the second change is calculated, that is, a stability loss of a change between adjacent frames of sample images and a stability loss of a change between super-resolution images of the adjacent frames of sample images are calculated.

In conclusion, according to the method provided in this embodiment, the inter-frame stability loss is used to constrain the generative network, and using the loss function for constraining adjacent frames can stably improve time series continuity of adjacent frames.

In some embodiments, optical flows are usually used for measuring changes between adjacent image frames.

In some embodiments, a first optical flow between the $i^{th}$ sample image frame and the $(i+1)^{th}$ sample image frame is calculated by using an optical flow network, a second optical flow between the super-resolution image of the $i^{th}$ sample image frame and the super-resolution image of the $(i+1)^{th}$ sample image frame is calculated by using the optical flow network, and the inter-frame stability loss is calculated based on the first optical flow and the second optical flow.

In some embodiments, a mean square error loss, also referred to as an L2 norm loss, is used for calculating an average value of squared differences between actual values and predicted values. For example,

$$D_{ifof} = \sum_{i=1}^{N}(F(g_{i+1}, g_i) - F(GT_{i+1}, GT_i))^2$$,

where i represents an $i^{th}$ frame, N represents a maximum value of i, F( ) represents an optical flow, $g_i$ represents an $i^{th}$ sample image frame, $g_{i+1}$ represents an $(i+1)^{th}$ sample image frame, $F(g_{i+1}, g_i)$ represents a first optical flow between the $i^{th}$ sample image frame and the $(i+1)^{th}$ sample image frame, $GT_i$ represents a super-resolution image of the $i^{th}$ sample image frame, $GT_{i+1}$ represents a super-resolution image of the $(i+1)^{th}$ sample image frame, and $F(GT_{i+1}, GT_i)$ represents a second optical flow between the super-resolution image of the $i^{th}$ sample image frame and the super-resolution image of the $(i+1)^{th}$ sample image frame.

In some embodiments, a pre-trained optical flow network is used for calculating optical flows, and the optical flow network is not optimized in a training process. The inter-frame stability loss is calculated based on a mean square deviation between the first optical flow and the second optical flow.

In some embodiments, the inter-frame stability loss is used for constraining the changes between the adjacent image frames. Training the generative network based on the inter-frame stability loss is mainly training the generative network based on the changes between the adjacent image frames. The inter-frame stability loss is calculated based on a difference between the first optical flow and the second optical flow. The inter-frame stability loss is fed back to the generative network, to train the generative network.

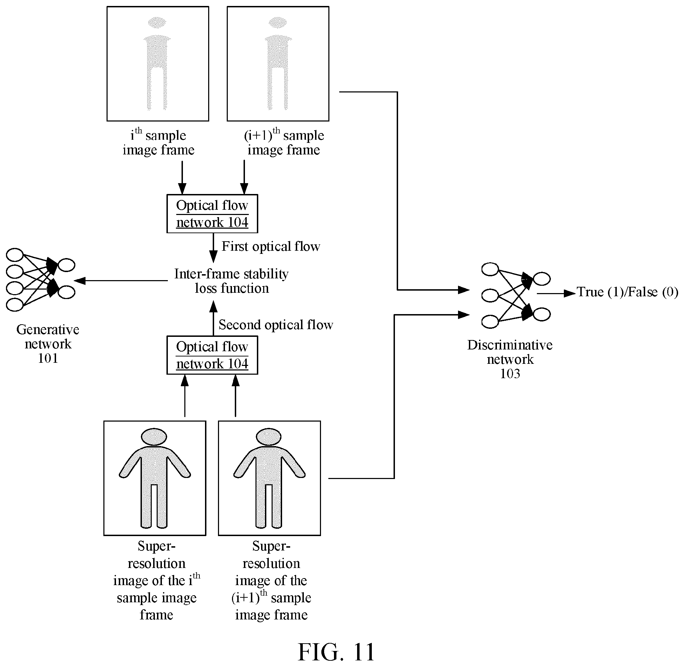

For example, as shown in FIG. 11, a discriminative network 103 performs result discrimination based on a sample image and a super-resolution image of the sample image, and outputs a true (1) result or a false (0) result. The $i^{th}$ sample image frame and the $(i+1)^{th}$ sample image frame are inputted into an optical flow network 104, to obtain the first optical flow. The super-resolution image of the $i^{th}$ sample image frame and the super-resolution image of the $(i+1)^{th}$ sample image frame are inputted into the optical flow network 104, to obtain the second optical flow. The first optical flow and the second optical flow are substituted into the inter-frame stability loss function, to calculate the inter-frame stability loss.

**Operation 442:** Calculate a first error loss of the discrimination result based on the discrimination result and an adversarial loss function.

The first error loss is an adversarial loss. The adversarial loss is a parameter configured for adjusting an output result of the generative network and an output result of the discriminative network, to make the output results tend to be consistent. Based on the adversarial loss function, the discriminative network may be trained in a process of training the generative network. Thus, the discriminative network can determine a difference between a generation result of the generative network and a real super-resolution image, and feed the difference back to the generative network, so as to cyclically train the generative network and the discriminative network.

In some embodiments, the generative network is trained by using the adversarial loss function. For example, $D_{adv\_G} = E_{x \sim p(x)}[\log (1- D(I_g)]$, where $D_{adv\_G}$ represents a first error loss, $E_*$ represents an expected value of the function, x is a low-resolution image, p(x) is distribution of the low-resolution image, D is a discriminative network, and $I_g$ is a super-resolution result inputted into the discriminative network, the super-resolution result being generated by a generative network.

The first error loss between a super-resolution result predicted by the generative network and a real sample image is calculated by using the adversarial loss function, and the generative network is trained based on the discrimination result of the discriminative network, so that the super-resolution result predicted by the generative network is determined as the true (1) result by the discriminative network.

According to the method provided in this embodiment, optimization training of the generative network is further implemented by using the adversarial loss function, so that the generative network generates more real super-resolution results.

**Operation 443:** Calculate a second error loss between a feature of the $(i+1)^{th}$ sample image frame and a feature of the super-resolution image of the $(i+1)^{th}$ sample image frame by using a perceptual loss function.

The perceptual loss function constrains a super-resolution result and a sample result in terms of eigenspace. A sample image and a corresponding super-resolution image simultaneously move through a pre-trained convolutional neural network, such as a visual geometry group (VGG) network, and corresponding features are generated, respectively. A distance between the feature of the sample image and the feature of the corresponding super-resolution image is constrained.

In some embodiments, the second error loss between the feature of the $(i+1)^{th}$ sample image frame and the feature of the super-resolution image of the $(i+1)^{th}$ sample image frame is calculated by using the perceptual loss function. The generative network is trained based on the second error loss between the feature of the $(i+1)^{th}$ sample image frame and the feature of the super-resolution image of the $(i+1)^{th}$ sample image frame.

In some embodiments, a mean square error loss function is used as the perceptual loss function to calculate an average value of squared differences between image features of real sample images and predicted super-resolution images, to train the generative network. For example,

$$D_{perc} = \sum_{i=0}^{N}(VGG(g_{i+1}) - VGG(GT_{i+1}))^2,$$

where $D_{perc}$ represents a second error loss, i represents an $i^{th}$ frame, N represents a maximum value of i, $g_{i+1}$ is a super-resolution image of an $(i+1)^{th}$ sample image frame, $GT_{i+1}$ is the $(i+1)^{th}$ sample image frame, $VGG(g_{i+1})$ is an image feature of the super-resolution image of the $(i+1)^{th}$ sample image frame, and $VGG(GT_{i+1})$ is an image feature of the $(i+1)^{th}$ sample image frame.

According to the method provided in this embodiment, a sample image and a super-resolution image are further constrained in terms of eigenspace by using the perceptual loss function. In this way, a quantity of reference information of an image is larger, and an effect of training is better.

**Operation 444:** Calculate a third error loss between the super-resolution image of the $(i+1)^{th}$ sample image frame and the $(i+1)^{th}$ sample image frame by using a pixel loss function.

The third error loss is a pixel loss. The pixel loss is a parameter configured for supervising that a super-resolution image predicted by the generative network does not deviate from an original low-resolution image. A large difference between a super-resolution result and a sample image is prevented based on a pixel loss function.

In some embodiments, an error loss between the super-resolution image of the $(i+1)^{th}$ sample image frame and the $(i+1)^{th}$ sample image frame is calculated by using the pixel loss function. The generative network is trained based on the error loss between the super-resolution image of the $(i+1)^{th}$ sample image frame and the $(i+1)^{th}$ sample image frame.

In some embodiments, a mean square error loss function is used as the pixel loss function to calculate an average value of squared differences between the real sample images and the predicted super-resolution images of the sample images, to train the generative network. For example,

$$D_{pixel} = \sum_{i=0}^{N}(g_{i+1} - GT_{i+1})^2$$

, where i represents an $i^{th}$ frame, N represents a maximum value of i, $g_{i+1}$ is a super-resolution image of an $(i+1)^{th}$ sample image frame, and $GT_{i+1}$ is the $(i+1)^{th}$ sample image frame.

According to the method provided in this embodiment, a difference between a sample image and a super-resolution image is constrained within a specific range by using the pixel loss function, so that the training process is stabler.

Operation 450 further includes the following sub-operations:

**Operation 451:** Train the generative network.

The generative network is trained based on the at least one of the inter-frame stability loss function, the adversarial loss function, the perceptual loss function, and the pixel loss function, so that a super-resolution image that is of a sample image and that is predicted by the generative network is close to the sample image.

In some embodiments, only the inter-frame stability loss function may be used to train the generative network, and other loss functions are not used.

In some embodiments, only the adversarial loss function may be used to train the generative network, and other loss functions are not used.

In some embodiments, only the perceptual loss function may be used to train the generative network, and other loss functions are not used.

In some embodiments, only the pixel loss function may be used to train the generative network, and other loss functions are not used.

In some embodiments, the inter-frame stability loss function and the adversarial loss function may be used to train the generative network, and other loss functions are not used.

In some embodiments, the inter-frame stability loss function and the perceptual loss function may be used to train the generative network, and other loss functions are not used.

In some embodiments, the inter-frame stability loss function and the pixel loss function may be used to train the generative network, and other loss functions are not used.

In some embodiments, the inter-frame stability loss function, the adversarial loss function, and the perceptual loss function may be used to train the generative network, and other loss functions are not used.

In some embodiments, the inter-frame stability loss function, the adversarial loss function, and the pixel loss function may be used to train the generative network, and other loss functions are not used.

In some embodiments, the inter-frame stability loss function, the perceptual loss function, and the pixel loss function may be used to train the generative network, and other loss functions are not used.

In some embodiments, the inter-frame stability loss function, the adversarial loss function, the perceptual loss function, and the pixel loss function may all be used to train the generative network.

**Training specific to the discriminative network:**

**Operation 442:** Calculate a first error loss of the discrimination result based on the discrimination result and an adversarial loss function.

The discrimination result is obtained by using the discriminative network to discriminate between the super-resolution image of the $(i+1)^{th}$ sample image frame and the $(i+1)^{th}$ sample image frame. An adversarial loss is a parameter configured for adjusting an output result of the generative network and an output result of the discriminative network, to make the output results tend to be consistent. Based on the adversarial loss function, the discriminative network may be trained in a process of training the generative network. Thus, the discriminative network can determine a difference between a generation result of the generative network and a real super-resolution image, and feed the difference back to the generative network, so as to cyclically train the generative network and the discriminative network.

In some embodiments, the discriminative network is trained by using the adversarial loss function. For example, $D_{adv\_D} = - E_{x \sim p(x)}[\log (1 - D(I_g)] + E_{xr \sim p(xr)}[\log D(xr)]$, where x is a low-resolution image, p(x) is distribution of the low-resolution image, xr is a super-resolution image, p(xr) is distribution of the super-resolution image, D is a discriminative network, and $I_g$ is a super-resolution result inputted into the discriminative network, the super-resolution result being generated by a generative network.

Operation 450 further includes the following sub-operations:

**Operation 452:** Train the discriminative network.

The discriminative network is trained based on the adversarial loss function, so that the discriminative network can determine a difference between a super-resolution result predicted by the generative network and an accurate super-resolution result, so as to train the discriminator for accuracy of a discriminant result.

This application provides the video super-resolution processing method that ensures stability of feature time series based on a constraint on adjacent frames. The generative adversarial network is used as an entire network to generate a super-resolution image with rich details and textures. The generative network uses a cyclic structure to add information transfer between adjacent frames in a video, and uses inter-frame information to improve a super-resolution effect and stability. In terms of loss functions, a generative adversarial loss is used to increase textures and details, and in addition, the image-level pixel loss function and the perceptual loss function are used to ensure that a super-resolution result of a single frame does not significantly deviate from an original image. Moreover, this application further provides an inter-frame time series loss function to perform inter-frame constraint on adjacent super-resolution results. This improves stability between video frames and reduces jumps, ensuring visual perception of video continuity and consistency.

This application mainly provides two innovation points:

1. A feature circulation network is used as the generative network, and features instead of an image are used as an input for a time series. Advantages thereof are as follows:

Efficiency is higher. Features may be directly used as an input for a next frame without a need for mapping to the eigenspace through a network. This can reduce a time cost. A longer time series indicates a greater time advantage over an image input.

More information is retained in features as compared with an image. In addition, a feature of a previous frame and a long time series feature are introduced. Through an increase in a quantity of time series information, problems caused by an image input, such as an information loss and an information error, are alleviated. Examples of an information error include bending, an artifact, and the like.

2. The constraint on adjacent frames is added to the training process. Advantages thereof are as follows: Using the pixel-level loss function for constraining adjacent frames can stably improve time series continuity of adjacent frames.

Only the constraint on adjacent frames needs to be added to video forward sequence training, so that stability of inter-frame super-resolution results can be constrained and texture jumps in an output result can be reduced. Reverse sequence training is not required.

The technical process of this application mainly includes two parts: the generative network and the training of the generative network. The generative network is a network that generates a super-resolution result, and is also used during actual application. The training of the generative network includes the discriminative network, the VGG network, the optical flow network, and the loss functions. A main role is to supervise the super-resolution result in the training process, so as to constrain the generative network.

An input to the generative network includes a current image frame, a feature of a previous frame, and a long time series feature before the previous frame. After the input moves through a structure of the generative network, a feature of the current frame, a long time series feature before the current frame, and a super-resolution image of the current frame are outputted. Both the feature of the current frame and the long time series feature before the current frame are used as an input to the generative network for a subsequent image. The super-resolution image enters a training phase, and is also outputted directly during application. The inputted image first moves through the feature extraction network, and the image is mapped to the eigenspace; then, the extracted feature together with the feature of the previous frame and the long time series feature before the previous frame are inputted into the feature fusion network for fusion; and after the fused feature is processed through the upsampling network, the super-resolution result is obtained. The extracted features and the fused features in the generation phase are respectively used in super-resolution of a next frame and a next frame of the next frame as inputs, to provide supplementary information.

The function of the feature extraction network is to map the inputted image to the eigenspace. An input is the image, and an output is the extracted feature. The feature is inputted into the super-resolution process of the next frame as an input. The feature extraction network used in this application is a convolutional network. To fully extract image features, convolutions with different receptive fields are used to process an input.

In this application, the multi-phase feature fusion network is used as the feature fusion network to fuse the feature of the current frame, the feature of the previous frame, and the long time series feature before the previous frame. First, the feature of the current frame and the feature of the previous frame are fused, and then fused feature of the two frames are fused with the long time series feature before the previous frame. A deformable convolution is mainly used to align and extract features. Two sets of features are concatenated, then the features are cross-mixed through a channel shuffle operation, and then mixed features are compressed and extracted by means of the deformable convolution.

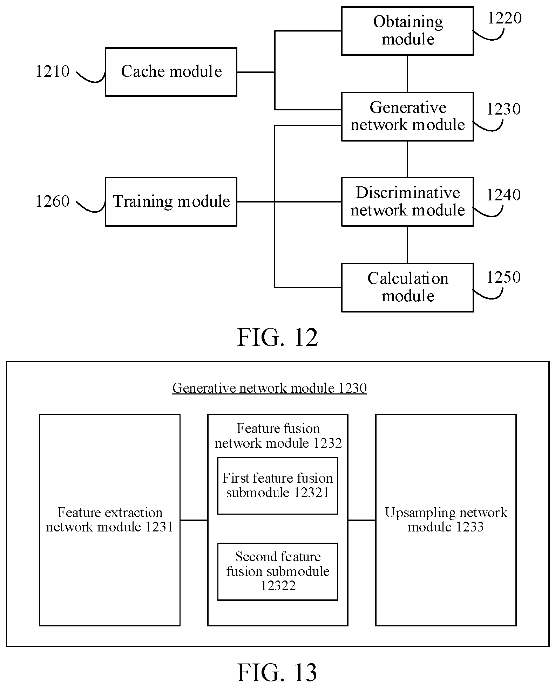

FIG. 12 is a block diagram of a video super-resolution processing apparatus according to an exemplary embodiment of this application. The apparatus includes:

an obtaining module 1220, configured to: obtain an $(i+1)^{th}$ image frame from a video, and obtain an image feature of an $i^{th}$ image frame in the video and a long time series feature before the $i^{th}$ image frame, the image feature of the $i^{th}$ image frame and the long time series feature before the $i^{th}$ image frame being cached by a cache module 1210 during super-resolution processing of the $i^{th}$ image frame and an $(i-1)^{th}$ image frame, respectively;

a generative network module 1230, configured to perform super-resolution prediction on the image feature of the $i^{th}$ image frame, the long time series feature before the $i^{th}$ image frame, and the $(i+1)^{th}$ image frame, to obtain a super-resolution image of the $(i+1)^{th}$ image frame, an image feature of the $(i+1)^{th}$ image frame, and a long time series feature before the $(i+2)^{th}$ image frame; and

the cache module, configured to cache the image feature of the (i+1)th image frame and the long time series feature before the (i+2)th image frame;

i being a positive integer greater than 2.

In a possible implementation, as shown in FIG. 13, the generative network module 1230 includes a feature extraction network module 1231, a feature fusion network module 1232, and an upsampling network module 1233.

The feature extraction network module 1231 is configured to perform feature extraction on the (i+1)th image frame, to obtain the image feature of the (i+1)th image frame.

The feature fusion network module 1232 is configured to fuse the image feature of the ith image frame, the long time series feature before the ith image frame, and the image feature of the (i+1)th image frame, to obtain the long time series feature before the (i+2)th image frame.

The upsampling network module 1233 is configured to perform prediction on the image feature of the (i+1)th image frame and the long time series feature before the (i+2)th image frame, to obtain the super-resolution image of the (i+1)th image frame.

In a possible implementation, the feature fusion network module 1232 includes a first feature fusion sub-module 12321 and a second feature fusion sub-module 12322.

The first feature fusion sub-module 12321 is configured to fuse the image feature of the (i+1)th image frame and the image feature of the ith image frame, to obtain a fused time series feature.

The second feature fusion sub-module 12322 is configured to fuse the fused time series feature and the long time series feature before the ith image frame, to obtain the long time series feature before the (i+2)th image frame.

In a possible implementation, the obtaining module 1220 is further configured to obtain the first image frame from the video.

The generative network module 1230 is further configured to perform super-resolution prediction on the first image frame, to obtain a super-resolution image of the first image frame and an image feature of the first image frame.

The obtaining module 1220 is further configured to obtain the second image frame from the video.

The generative network module 1230 is further configured to perform super-resolution prediction on the image feature of the first image frame and the second image frame, to obtain a super-resolution image of the second image frame and an image feature of the second image frame.

The obtaining module 1220 is further configured to obtain the third image frame from the video.

The generative network module 1230 is further configured to perform super-resolution prediction on the image feature of the second image frame and the third image frame, to obtain a super-resolution image of the third image frame, an image feature of the third image frame, and a long time series feature before a fourth image frame.

The cache module is configured to cache the image feature of the third image frame and the long time series feature before the fourth image frame.

In a possible implementation, the generative network module 1230 is obtained through training in the following mode:

The caching module 1210 is further configured to cache an ith sample image frame and an (i+1)th sample image frame from a sample video.

The generative network module 1230 is configured to predict a super-resolution image of the ith sample image frame and a super-resolution image of the (i+1)th sample image frame.

A calculation module 1250 is configured to calculate an inter-frame stability loss between a first change and a second change by using an inter-frame stability loss function. The first change is a change between the ith sample image frame and the (i+1)th sample image frame, and the second change is a change between the super-resolution image of the ith sample image frame and the super-resolution image of the (i+1)th sample image frame. The inter-frame stability loss is configured for constraining stability between adjacent image frames.

A training module 1260 is configured to train the generative network module based on the inter-frame stability loss.

In a possible implementation, the calculation module 1250 is further configured to calculate a first optical flow of the first change by using an optical flow network module.

The calculation module 1250 is further configured to calculate a second optical flow of the second change by using the optical flow network module.

The calculation module 1250 is further configured to substitute the first optical flow and the second optical flow into the inter-frame stability loss function, to calculate the inter-frame stability loss.

In a possible implementation, a discriminative network module 1240 is configured to discriminate between the super-resolution image of the (i+1)th sample image frame and the (i+1)th sample image frame, to obtain a discrimination result.

The calculation module 1250 is further configured to calculate a first error loss of the discrimination result based on the discrimination result and an adversarial loss function.

The training module 1260 is further configured to train the generative network and the discriminative network alternately based on the first error loss.

The adversarial loss function is configured for constraining consistency between a super-resolution result of the (i+1)th sample image frame and the discrimination result.

In a possible implementation, the calculation module 1250 is further configured to calculate a second error loss between a feature of the $(i+1)^{th}$ sample image frame and a feature of the super-resolution image of the $(i+1)^{th}$ sample image frame by using a perceptual loss function.

The training module 1260 is further configured to train the generative network based on the second error loss.

The perceptual loss function is configured for constraining consistency between the $(i+1)^{th}$ sample image frame and the super-resolution image of the $(i+1)^{th}$ sample image frame in terms of eigenspace.

In a possible implementation, the calculation module 1250 is further configured to calculate a third error loss between the super-resolution image of the $(i+1)^{th}$ sample image frame and the $(i+1)^{th}$ sample image frame by using a pixel loss function.

The training module 1260 is further configured to train the generative network based on the third error loss.

The pixel loss function is configured for constraining consistency between the super-resolution image of the $(i+1)^{th}$ sample image frame and the $(i+1)^{th}$ sample image frame in terms of image content.

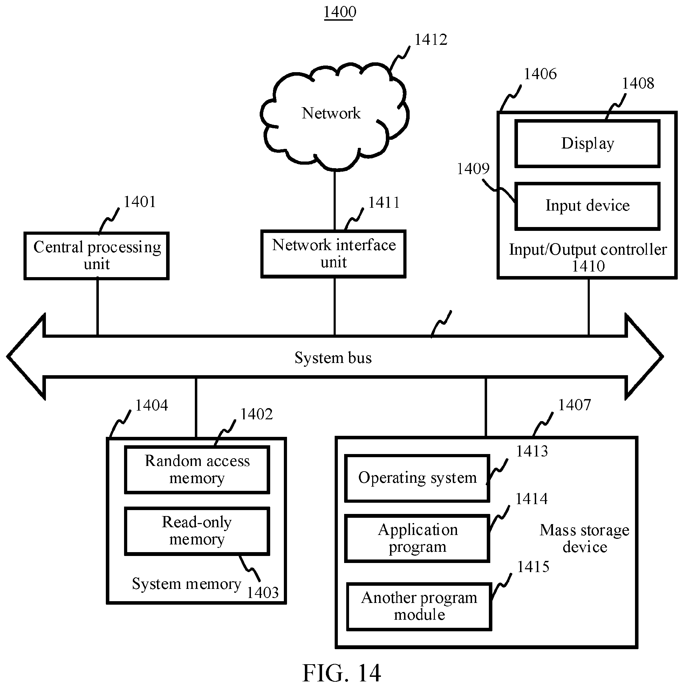

FIG. 14 is a diagram of a structure of a computer device according to an exemplary embodiment of this application. For example, a computer device 1400 includes a central processing unit (CPU) 1401, a system memory 1404 including a random access memory (RAM) 1402 and a read-only memory (ROM) 1403, and a system bus 1405 connecting the system memory 1404 and the central processing unit 1401. The computer device 1400 further includes a basic input/output (I/O) system 1406 assisting in transmitting information between components in the computer, and a mass storage device 1407 configured to store an operating system 1413, a client 1414, and another program module 1415.

The basic I/O system 1406 includes a display 1408 configured to display information, and an input device 1409 configured for inputting information by a user, such as a mouse or a keyboard. The display 1408 and the input device 1409 are both connected to the central processing unit 1401 by using an input/output controller 1410 connected to the system bus 1405. The basic I/O system 1406 may further include the input/output controller 1410 configured to receive and process inputs from a plurality of other devices such as a keyboard, a mouse, and an electronic stylus. Likewise, the input/output controller 1410 further provides an output to a display screen, a printer, or another type of output device.

The mass storage device 1407 is connected to the central processing unit 1401 by using a mass storage controller (not shown) connected to the system bus 1405. The mass storage device 1407 and a computer-readable medium associated with the mass storage device 1407 provide non-volatile storage for the computer device 1400. To be specific, the mass storage device 1407 may include a computer-readable medium (not shown) such as a hard disk or a compact disc read-only memory (CD-ROM) drive.

The computer-readable medium may include a computer storage medium and a communication medium. The computer storage medium includes a volatile or non-volatile, or removable or non-removable medium that is implemented by using any method or technology and that is configured for storing information such as a computer-readable instruction, a data structure, a program module, or other data. The computer storage medium includes a RAM, a ROM, an erasable programmable read-only memory (EPROM), an electrically erasable programmable read-only memory (EEPROM), a flash memory or another solid-state memory technology, a CD-ROM, a digital versatile disc (DVD) or another optical memory, a tape cartridge, a magnetic tape, a magnetic disk memory, or another magnetic storage device. Certainly, a person skilled in the art may learn that the computer storage medium is not limited to the foregoing several types. The system memory 1404 and the mass storage device 1407 may be collectively referred to as a memory.

According to the embodiments of this application, the computer device 1400 may further be connected, through a network such as the Internet, to a remote computer on the network and run. To be specific, the computer device 1400 may be connected to a network 1412 by using a network interface unit 1411 connected to the system bus 1405, or may be connected to another type of network or a remote computer system (not shown) by using a network interface unit 1411.

An exemplary embodiment of this application further provides a computer-readable storage medium. The computer-readable storage medium stores at least one program. The at least one program is loaded and executed by a processor to implement the video super-resolution processing method according to the foregoing method embodiments.

An exemplary embodiment of this application further provides a computer program product. The computer program product includes at least one program, and the at least one program is stored in a readable storage medium. A processor of a computer device reads the at least one program from the readable storage medium, and the processor executes the at least one program to cause the computer device to perform the video super-resolution processing method according to the foregoing method embodiments.

"A plurality of" mentioned in the specification means two or more. After considering the specification and practicing the present disclosure, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application. The specification and embodiments are considered as merely exemplary, and the actual scope and spirit of this application are pointed out in the following claims.

A person of ordinary skill in the art may understand that all or some of the operations of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, improvement, or the like made within the spirit and principle of this application shall fall within the protection scope of this application.

**Claims**

1. A video super-resolution processing method, the method being executable by a computer device, and the method comprising:

   obtaining an $(i+1)^{th}$ image frame from a video, and obtaining an image feature of an $i^{th}$ image frame and a long time series feature before the $i^{th}$ image frame, the image feature of the $i^{th}$ image frame and the long time series feature before the $i^{th}$ image frame being cached during super-resolution processing of the $i^{th}$ image frame and an $(i-1)^{th}$ image frame, respectively; performing super-resolution prediction on the image feature of the $i^{th}$ image frame, the long time series feature before the $i^{th}$ image frame, and the $(i+1)^{th}$ image frame by using a generative network, to obtain a super-resolution image of the $(i+1)^{th}$ image frame, an image feature of the $(i+1)^{th}$ image frame, and a long time series feature before an $(i+2)^{th}$ image frame; and caching the image feature of the $(i+1)^{th}$ image frame and the long time series feature before the $(i+2)^{th}$ image frame; i being a positive integer greater than 2.

2. The method according to claim 1, wherein the generative network comprises a feature extraction network, a feature fusion network, and an upsampling network; and the performing super-resolution prediction on the image feature of the $i^{th}$ image frame, the long time series feature before the $i^{th}$ image frame, and the $(i+1)^{th}$ image frame by using a generative network, to obtain a super-resolution image of the $(i+1)^{th}$ image frame, an image feature of the $(i+1)^{th}$ image frame, and a long time series feature before an $(i+2)^{th}$ image frame comprises:

   performing feature extraction on the $(i+1)^{th}$ image frame by using the feature extraction network, to obtain the image feature of the $(i+1)^{th}$ image frame; fusing the image feature of the $i^{th}$ image frame, the long time series feature before the $i^{th}$ image frame, and the image feature of the $(i+1)^{th}$ image frame by using the feature fusion network, to obtain the long time series feature before the $(i+2)^{th}$ image frame; and performing prediction on the image feature of the $(i+1)^{th}$ image frame and the long time series feature before the $(i+2)^{th}$ image frame by using the upsampling network, to obtain the super-resolution image of the $(i+1)^{th}$ image frame.

3. The method according to claim 2, wherein the feature fusion network comprises a first feature fusion layer and a second feature fusion layer; and the fusing the image feature of the $i^{th}$ image frame, the long time series feature before the $i^{th}$ image frame, and the image feature of the $(i+1)^{th}$ image frame by using the feature fusion network, to obtain the long time series feature before the $(i+2)^{th}$ image frame comprises:

   fusing the image feature of the $(i+1)^{th}$ image frame and the image feature of the $i^{th}$ image frame by using the first feature fusion layer, to obtain a fused time series feature; and fusing the fused time series feature and the long time series feature before the $i^{th}$ image frame by using the second feature fusion layer, to obtain the long time series feature before the $(i+2)^{th}$ image frame.

4. The method according to claim 3, wherein the method further comprises:

   obtaining the first image frame from the video; performing super-resolution prediction on the first image frame by using the generative network, to obtain a super-resolution image of the first image frame and an image feature of the first image frame; obtaining the second image frame from the video; performing super-resolution prediction on the image feature of the first image frame and the second image frame by using the generative network, to obtain a super-resolution image of the second image frame and an image feature of the second image frame; obtaining the third image frame from the video; performing super-resolution prediction on the image feature of the second image frame and the third image frame by using the generative network, to obtain a super-resolution image of the third image frame, an image feature of the third image frame, and a long time series feature before a fourth image frame; and

caching the image feature of the third image frame and the long time series feature before the fourth image frame.

5. The method according to any one of claims 1 to 4, wherein the generative network is obtained through training by the following steps:

caching an $i^{th}$ sample image frame and an $(i+1)^{th}$ sample image frame from a sample video, i being a positive integer greater than 2;

predicting a super-resolution image of the $i^{th}$ sample image frame and a super-resolution image of the $(i+1)^{th}$ sample image frame by using the generative network;

calculating an inter-frame stability loss between a first change and a second change by using an inter-frame stability loss function, the first change being a change between the $i^{th}$ sample image frame and the $(i+1)^{th}$ sample image frame, the second change being a change between the super-resolution image of the $i^{th}$ sample image frame and the super-resolution image of the $(i+1)^{th}$ sample image frame, and the inter-frame stability loss being used for constraining super-resolution stability between adjacent image frames; and

training the generative network based on the inter-frame stability loss.

6. The method according to claim 5, wherein the calculating an inter-frame stability loss between a first change and a second change by using an inter-frame stability loss function comprises:

calculating a first optical flow of the first change by using an optical flow network;

calculating a second optical flow of the second change by using the optical flow network; and

substituting the first optical flow and the second optical flow into the inter-frame stability loss function, to calculate the inter-frame stability loss.

7. The method according to claim 5, wherein the method further comprises:

discriminating between the super-resolution image of the $(i+1)^{th}$ sample image frame and the $(i+1)^{th}$ sample image frame by using a discriminative network, to obtain a discrimination result;

calculating a first error loss of the discrimination result based on the discrimination result and an adversarial loss function; and

training the generative network and the discriminative network alternately based on the first error loss;

the adversarial loss function being used for constraining consistency between the super-resolution result of the $(i+1)^{th}$ sample image frame and the discrimination result.

8. The method according to claim 7, wherein the method further comprises:

calculating a second error loss between a feature of the $(i+1)^{th}$ sample image frame and a feature of the super-resolution image of the $(i+1)^{th}$ sample image frame by using a perceptual loss function; and

training the generative network based on the second error loss;

the perceptual loss function being used for constraining consistency between the $(i+1)^{th}$ sample image frame and the super-resolution image of the $(i+1)^{th}$ sample image frame in terms of eigenspace.

9. The method according to claim 8, wherein the method further comprises:

calculating a third error loss between the super-resolution image of the $(i+1)^{th}$ sample image frame and the $(i+1)^{th}$ sample image frame by using a pixel loss function; and

training the generative network based on the third error loss;

the pixel loss function being used for constraining consistency between the super-resolution image of the $(i+1)^{th}$ sample image frame and the $(i+1)^{th}$ sample image frame in terms of image content.

10. A video super-resolution processing apparatus, the apparatus comprising:

an obtaining module, configured to: obtain an $(i+1)^{th}$ image frame from a video, and obtain an image feature of an $i^{th}$ image frame in the video and a long time series feature before the $i^{th}$ image frame, the image feature of the $i^{th}$ image frame and the long time series feature before the $i^{th}$ image frame being cached by a cache module during super-resolution processing of the $i^{th}$ image frame and an $(i-1)^{th}$ image frame, respectively;

a generative network module, configured to perform super-resolution prediction on the image feature of the $i^{th}$ image frame, the long time series feature before the $i^{th}$ image frame, and the $(i+1)^{th}$ image frame, to obtain a super-resolution image of the $(i+1)^{th}$ image frame, an image feature of the $(i+1)^{th}$ image frame, and long time series feature before an $(i+2)^{th}$ image frame; and

the cache module, configured to cache the image feature of the $(i+1)^{th}$ image frame and the long time series feature before the $(i+2)^{th}$ image frame;

i being a positive integer greater than 2.

**11.** The apparatus according to claim 10, wherein the generative network module comprises a feature extraction network module, a feature fusion network module, and an upsampling network module;

the feature extraction network module is configured to perform feature extraction on the $(i+1)^{th}$ image frame, to obtain the image feature of the $(i+1)^{th}$ image frame;

the feature fusion network module is configured to fuse the image feature of the $i^{th}$ image frame, the long time series feature before the $i^{th}$ image frame, and the image feature of the $(i+1)^{th}$ image frame, to obtain the long time series feature before the $(i+2)^{th}$ image frame; and

the upsampling network module is configured to perform prediction on the image feature of the $(i+1)^{th}$ image frame and the long time series feature before the $(i+2)^{th}$ image frame, to obtain the super-resolution image of the $(i+1)^{th}$ image frame.

**12.** A computer device, the computer device comprising a processor and a memory, the memory storing at least one instruction, at least one program, a code set, or an instruction set, and the at least one instruction, the at least one program, the code set, or the instruction set being loaded and executed by the processor to implement the video super-resolution processing method according to any one of claims 1 to 10.

**13.** A computer-readable storage medium, the readable storage medium storing at least one program, and the at least one program being loaded and executed by a processor to implement the video super-resolution processing method according to any one of claims 1 to 10.

**14.** A computer program product, the computer program product comprising at least one program, the at least one program being stored in a computer-readable storage medium, a processor of a computer device reading the at least one program from the computer-readable storage medium, and the processor executing the at least one program to cause the computer device to perform the video super-resolution processing method according to any one of claims 1 to 10.

FIG. 1

FIG. 2

Obtain an $(i+1)^{th}$ image frame from a video, and obtain an image feature of an $i^{th}$ image frame in the video and a long time series feature before the $i^{th}$ image frame, the image feature of the $i^{th}$ image frame and the long time series feature before the $i^{th}$ image frame being cached during super-resolution processing of the $i^{th}$ image frame and an $(i-1)^{th}$ image frame, respectively ⟩ 220

Perform feature extraction on the $(i+1)^{th}$ image frame by using the feature extraction network, to obtain the image feature of the $(i+1)^{th}$ image frame ⟩ 241

Fuse the image feature of the $i^{th}$ image frame, the long time series feature before the $i^{th}$ image frame, and the image feature of the $(i+1)^{th}$ image frame by using the feature fusion network, to obtain the long time series feature before the $(i+2)^{th}$ image frame ⟩ 242

Perform prediction on the image feature of the $(i+1)^{th}$ image frame and the long time series feature before the $(i+2)^{th}$ image frame by using the upsampling network, to obtain the super-resolution image of the $(i+1)^{th}$ image frame ⟩ 243

Cache the image feature of the $(i+1)^{th}$ image frame and the long time series feature before the $(i+2)^{th}$ image frame ⟩ 260

FIG. 3

FIG. 4

Image feature of an i$^{th}$
image frame

Channel shuffle

Deformable
convolution

Image feature of an
(i+1)$^{th}$ image frame

Fused time
series feature

FIG. 5

Image feature of an i$^{th}$
image frame

Image feature of an
(i+1)$^{th}$ image frame

Long time series
feature before an i$^{th}$
image frame

Feature fusion
network 1012

First
feature
fusion
layer
10121

Second
feature
fusion
layer
10122

Long time series feature
before the (i+2)$^{th}$ image
frame

FIG. 6

```
┌──────────────────────────────────────────────────────────────────────┐      310
│              Obtain the first image frame from the video               │ ⌐⌐
└──────────────────────────────────────────────────────────────────────┘
                                    │
                                    ▼
┌──────────────────────────────────────────────────────────────────────┐      320
│ Perform super-resolution prediction on the first image frame by using  │ ⌐⌐
│ the generative network, to obtain a super-resolution image of the first │
│    image frame and an image feature of the first image frame           │
└──────────────────────────────────────────────────────────────────────┘
                                    │
                                    ▼
┌──────────────────────────────────────────────────────────────────────┐      330
│             Obtain the second image frame from the video               │ ⌐⌐
└──────────────────────────────────────────────────────────────────────┘
                                    │
                                    ▼
┌──────────────────────────────────────────────────────────────────────┐      340
│ Perform super-resolution prediction on the image feature of the first   │ ⌐⌐
│  image frame and the second image frame by using the generative network,│
│ to obtain a super-resolution image of the second image frame and an     │
│        image feature of the second image frame                         │
└──────────────────────────────────────────────────────────────────────┘
                                    │
                                    ▼
┌──────────────────────────────────────────────────────────────────────┐      350
│             Obtain the third image frame from the video                │ ⌐⌐
└──────────────────────────────────────────────────────────────────────┘
                                    │
                                    ▼
┌──────────────────────────────────────────────────────────────────────┐      360
│ Perform super-resolution prediction on the image feature of the second  │ ⌐⌐
│ image frame and the third image frame by using the generative network,  │
│ to obtain a super-resolution image of the third image frame, an image   │
│ feature of the third image frame, and a long time series feature before │
│                    a fourth image frame                                │
└──────────────────────────────────────────────────────────────────────┘
                                    │
                                    ▼
┌──────────────────────────────────────────────────────────────────────┐      370
│ Cache the image feature of the third image frame and the long time     │ ⌐⌐
│      series feature before the fourth image frame                      │
└──────────────────────────────────────────────────────────────────────┘
```

FIG. 7

Sample image

Generative
network 101

Super-
resolution
prediction

Discriminative
network 103

Discrimination
result

Super-resolution image of
the sample image

Loss functions (inter-frame stability loss function, adversarial loss function,
perceptual loss function, and pixel loss function)

FIG. 8

Cache an $i^{th}$ sample image frame and an $(i+1)^{th}$ sample image frame from a sample video    410

Predict a super-resolution image of the $i^{th}$ sample image frame and a super-resolution image of the $(i+1)^{th}$ sample image frame by using the generative network    420

Discriminate between the super-resolution image of the $(i+1)^{th}$ sample image frame and the $(i+1)^{th}$ sample image frame by using a discriminative network, to obtain a discrimination result    430

Calculate an error loss between the sample image and the super-resolution image of the sample image based on the discrimination result and a loss function    440

Train the generative network and the discriminative network alternately based on the error loss    450

FIG. 9

Cache an $i^{th}$ sample image frame and an $(i+1)^{th}$ sample image frame from a sample video —— 410

Predict a super-resolution image of the $i^{th}$ sample image frame and a super-resolution image of the $(i+1)^{th}$ sample image frame by using the generative network —— 420

Discriminate between the super-resolution image of the $(i+1)^{th}$ sample image frame and the $(i+1)^{th}$ sample image frame by using a discriminative network, to obtain a discrimination result —— 430

Train the generative network and the discriminative network alternately

For the generative network

For the discriminative network

Calculate an inter-frame stability loss between a first change and a second change by using an inter-frame stability loss function
441

Calculate a first error loss of the discrimination result based on the discrimination result and an adversarial loss function
442

Calculate a second error loss between a feature of the $(i+1)^{th}$ sample image frame and a feature of the super-resolution image of the $(i+1)^{th}$ sample image frame by using a perceptual loss function
443

Calculate a third error loss between the super-resolution image of the $(i+1)^{th}$ sample image frame and the $(i+1)^{th}$ sample image frame by using a pixel loss function
444

Train the generative network
451

Calculate a first error loss of the discrimination result based on the discrimination result and an adversarial loss function
442

Train the discriminative network
452

FIG. 10

i<sup>th</sup> sample image frame

(i+1)<sup>th</sup> sample image frame

Optical flow network 104

First optical flow

Inter-frame stability loss function

Generative network 101

Second optical flow

Optical flow network 104

Discriminative network 103

True (1)/False (0)

Super-resolution image of the i<sup>th</sup> sample image frame

Super-resolution image of the (i+1)<sup>th</sup> sample image frame

FIG. 11

1210 — Cache module

1220 — Obtaining module

1230 — Generative network module

1260 — Training module

1240 — Discriminative network module

1250 — Calculation module

## FIG. 12

Generative network module 1230

Feature extraction network module 1231

Feature fusion network module 1232

First feature fusion submodule 12321

Second feature fusion submodule 12322

Upsampling network module 1233

## FIG. 13

1400

Network 1412

1406 1408

Display

1409 Input device

Input/Output controller
1410

1401
Central processing
unit

1411
Network interface
unit

System bus

1404 1402

Random access
memory

Read-only
memory

System memory 1403

1407

1413
Operating system

1414
Application
program

Mass storage
device

1415
Another program
module

FIG. 14

## INTERNATIONAL SEARCH REPORT

| International application No. |
| --- |
| **PCT/CN2023/123916** |

### A. CLASSIFICATION OF SUBJECT MATTER

G06T 3/40(2006.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

DWPI, CNTXT, USTXT, CNKI, WOTXT, CNABS: 视频, 图像, 帧, 超分, 时序, 特征, 预测, 融合, 网络, 长时序, 稳定, image, frame, super, division, network, feature, video, predict+, time, period, sequence

### C. DOCUMENTS CONSIDERED TO BE RELEVANT

| Category* | Citation of document, with indication, where appropriate, of the relevant passages | Relevant to claim No. |
| --- | --- | --- |
| Y | CN 113592709 A (TENCENT TECHNOLOGY (SHENZHEN) CO., LTD.) 02 November 2021 (2021-11-02) description, paragraphs [0058]-[0175] | 1, 10, 12-14 |
| Y | CN 114612307 A (BEIJING DAJIA INTERNET INFORMATION TECHNOLOGY CO., LTD.) 10 June 2022 (2022-06-10) description, paragraphs [0084]-[0151] | 1, 10, 12-14 |
| A | US 2021183073 A1 (QUALCOMM INC.) 17 June 2021 (2021-06-17) entire document | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 December 2023** | **21 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 113592709 | A | 02 November 2021 | HK | 40056090 | A0 | 25 March 2022 |
| CN | 114612307 | A | 10 June 2022 | None | | | |
| US | 2021183073 | A1 | 17 June 2021 | US | 2020160535 | A1 | 21 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211476937